# EUROPEAN PATENT SPECIFICATION

(11) **EP 3 086 102 B1**
(45) Date of publication and mention of the grant of the patent: **13.02.2019**
(21) Application number: 15164449.9
(22) Date of filing: 21.04.2015
(51) Int. Cl.: G01K 17/06, F24D 19/10, G01D 4/00

(54) **METHOD OF OPERATING A HEATING SYSTEM, HEATING SYSTEM AND USES HEREOF**
VERFAHREN ZUM BETRIEB EINES HEIZSYSTEMS, HEIZSYSTEM UND VERWENDUNGEN DAVON
PROCÉDÉ DE FONCTIONNEMENT D'UN SYSTÈME DE CHAUFFAGE, SYSTÈME DE CHAUFFAGE ET UTILISATIONS CORRESPONDANTES

(43) Date of publication of application: 26.10.2016
(73) Proprietor: ista International GmbH, 45131 Essen (DE)
(72) Inventor: Mathiesen, Benny Martin, 5500 Middelfart (DK)
(74) Representative: Patentgruppen A/S

(56) References cited:
- EP-A1- 1 573 288
- EP-A2- 1 843 136
- CN-U- 201 672 603
- DE-A1- 3 612 121

## Description

### Field of the invention

The invention relates to a method of operating a heating system, a heating system according to the preamble of claim 8 and uses hereof

### Background of the invention

A building with accommodation units may be heated with a supply of heated water flowing in radiators located in the accommodation units. The utility provider normally establishes the heat consumption in the building with a main meter detecting the full amount of energy consumed.
A heat consumption manager may also have installed heat cost allocators on each radiator for detecting the operating state values. The detected values are used by the manager to divide the full amount of consumed energy into heat consumption of each accommodation unit as a part of a billing service provided by the heat consumption manager.
The utility provider normally reports value of heat consumption in the building quarterly, half-yearly or yearly which allows the heat consumption manager to bill the tenants in the accommodation units with an accordingly frequency.
The main meter and heat cost allocators ensure an advantageous and fair billing service for the tenants in the accommodation units but is less suited for providing heat consumption values on a regularly basis.
DE 36 12 121 A1 discloses a consumption monitoring system providing a meter for detecting total building consumption as well as individual meters in each apartment. Each tenant can read his own consumption on a regular basis for customized periods. Another prior art heating cost monitoring system is described in EP 1 843 136 A2. The system of EP'136 facilitates annual billing as well as intermediate billing in case of a change of tenant.

An object of the invention is therefore to advantageously provide heat consumption values on a regularly basis for accommodation units in a building.

### Brief description of the invention

The invention provides a method of operating a heating system as specified in claim 1.

The frequency difference provides access to heat consumption values from different main meters on a dependable basis and a regularly basis for the accommodation units in a building.
Both types of heat consumption values may be calculated at the same backend computer system irrespective of the fact that the main meter value required for the billing service calculation is acquired from elsewhere, e.g. from the fluid energy medium supplier with a different accessibility than the additional main meter values. An advantageous feature of the invention is that the reporting of calculated heat consumption values may be performed independently in the sense, that heat cost allocation on the basis of the received additional main meter values and allocation values may be read and reported without awaiting reading or reporting of main meter values.

A further advantage of the invention is that the data delivery delay from the main meter readings may be perfectly synchronized with the available detected additional main meter readings at the backend computer system. This is advantageous due to the fact that a lack of synchronization may affect the quality of the reported heat consumption to an unacceptable degree, specifically if an increased reporting frequency of consumption data to the tenants is desired.
The additional main meter and the mentioned synchronization also counteract lack of reporting due to main meter delays.

The term "representation" should be understood as a representing of a mentioned value or a derived value hereof.

The phrase "reporting ... to said accommodation units (2) ..." should be understood as reporting values for accommodation units to tenants of the accommodation units in pre-defined places or to persons with similar relations to the accommodation units as the tenants in pre-defined places wherein examples of pre-defined places are described in connection with embodiments of the invention.

In an embodiment of the invention, the reporting frequency f_{rep,additional} of said additional main meter heat consumption values is larger than the reporting frequency f_{rep,main} of said main meter heat consumption values such as three or more reports of said additional main meter heat consumption values for each report of said main meter heat consumption values. Tenants in an accommodation unit may hereby receive a better understanding of the present heat consumption by the larger reporting frequency from the additional main meter and hereby adapt any heat consumption accordingly in the accommodation unit e.g. to reduce heat consumption costs and to save natural resources.

In other embodiments of the invention, said additional main meter heat consumption values are reported to said accommodation units at a reporting frequency f_{rep,additional} corresponding to the transmission frequency of said detected allocation values such as one report of said additional main meter heat consumption values every 48 hours, 24 hours or less and said main meter heat consumption values are reported to said accommodation units with a reporting frequency f_{rep,main} such as quarterly, half-yearly or yearly. Hereby may the reporting frequencies be adapted to present aspects of a heating system such as the nature of existing meters and heat cost allocators, local methods of doing business and official law requirements but still provide the tenants with heat consumption values on a more regular basis to provide transparency regarding the heat consumption and heat consumption costs.

The additional main meter may advantageously provide for remote reading so as to facilitate transmission of detected values relatively often.

In a further embodiment of the invention, detected main meter values from the central data storage are received in said backend computer system for allocation and/or correlation of the detected additional main meter values or derived representations of said detected values. The type and class of the main meter and the additional main meter may be the same or different in the sense that it is always ensured that the main meter will be used as the reference in allocation for billing purpose and/or for correlation of additional main meter values at regular intervals, e.g. at least one time per year as a synchronization between the values of the main meter and additional main meter.

In an embodiment of the invention, at least said additional main meter heat consumption values of an accommodation unit are reported to a display unit in said accommodation unit. The display unit will inform and encourage tenants in an accommodation unit to adapt and preferably reduce the level of heat consumption by displaying current heat consumption values.

In another embodiment of the invention, at least said additional main meter values and/or said additional main meter heat consumption values are reported automatically as wireless and/or encrypted transmissions. Hereby is ensured a fast and reliable but also secure transmission of heat consumption values to the accommodation units which ensure that only tenants of an accommodation unit and other authorized parties may access the values of the unit.

In another embodiment of the invention, said at least one additional main meter for detection of said fluid energy medium flowing into the heating system is installed in the heating system as an initial operation. The initial installation of an additional main meter may provide the accommodation units in a building with heat consumption values from different main meters on a dependable and a regularly basis.

Further, the invention relates to a heating system for a building as specified in claim 7.

Hereby it is possible to establish an advantageous heating system with the installed additional main meter as an additional unit to the provided main meter in a building.

The term "communication channel" should be understood as any type of channel for data communication including digital or analog communication by wire or by wireless; by visual communication and display; or by mail or personal delivery.

In an embodiment of the invention, said backend computer system is provided at a heat consumption manager or said backend computer system is provided at a building manager e.g. in a part of the building such as the basement or located in close proximity of the building. The close location of the backend computer system is especially advantageous in relation to the data communication of - for example - the additional main meter values.

In another embodiment of the invention, said additional main meter is installed in proximity of said main meter on the main pipe in said building. Hereby is ensured that the detected values of the main meters are very similar by facing the same situations and environments.

The invention also relates to an advantageous heating system for a building which provides access to heat consumption values from different main meters on a dependable and a regularly basis.

In an embodiment of the invention, said main meter and said additional main meter are of the same meter type or class and share meter data such as a similar degree of measuring accuracy. Hereby is ensured that the detected values of the main meters are very similar by being matched in meter type or class.

In another embodiment of the invention, meter data of said additional main meter is different from the meter data of said main meter such as a lower degree of measuring accuracy in said additional main meter. The additional main meter may for example be a cost efficient type of main meter by the lower degree of measuring accuracy or an easier installed type of main meter while it is still possible to provide the tenants with trustworthy heat consumption values on a regularly basis.

In further embodiment of the invention, said additional main meter is located on a primary side or on a secondary side of the main pipe as divided by a heating unit such as a central furnace or boiler. Hereby it is possible to provide the tenants with heat consumption values from an additional main meter regardless of the nature of the heating system and the main pipe of the heating system e.g. regardless of difficult accessibility to one side or section of the main pipe.

The invention also relates to uses of a method of operating a heating system in a building and a heating system as part of a district heating system. Hereby are provided advantageous places of use for the invention.

### Figures

The invention will be described in the following with reference to the figures in which
- fig. 1: illustrates a district heating system for heating a number of buildings,
- fig. 2: illustrates a first embodiment of a heating system according to the present invention,
- fig. 3: illustrates the embodiment of fig. 2 in more details, and
- fig. 4: illustrates a further embodiment of a heating system according to the present invention.

The figures are provided to illustrate and support the understanding of the invention and are not to be regarded as limiting of the scope of protection defined by the appended claims.

### Detailed description of the invention

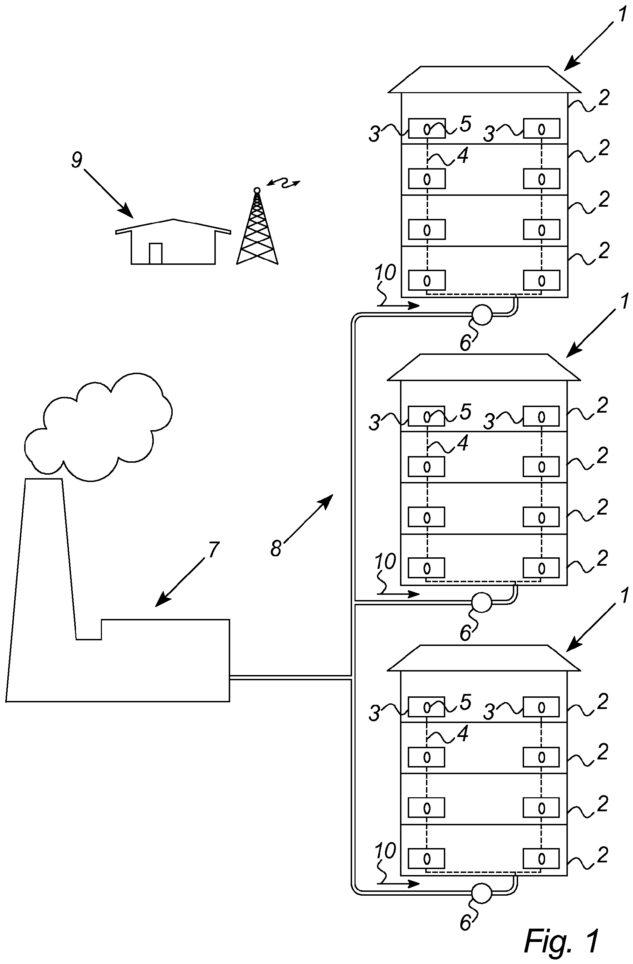

Fig. 1 illustrates a district heating system with a district heating plant exemplifying a fluid energy medium supplier 7 and a district heating network exemplifying a distribution system 8 for supplying and distributing of the fluid energy medium 10 to a number of buildings 1 in providing space and water heating.

Each illustrated building 1 has means for providing the space and water heating which means is connected to the distribution system 8 via a main pipe of the building. The main pipe is provided with a main meter 6 for detecting the energy consumed in the building 1 from the delivered fluid energy medium 10 by the supplier 7. The detected main meter values are transmitted to the fluid energy medium supplier 7 automatically or by manual reading of the main meter values.

The building 1 also has a number of accommodation units 2 which are heated with heating arrangements 3 such as a radiator or a group of radiators connected to the main pipe via piping 4 (illustrated with dotted lines). The radiators may for example be heated with a fluid energy medium of steam, hot air or hot water as supplied by the fluid energy medium supplier 7.

Heat cost allocators 5 are positioned on the surface of the radiators 3 in every accommodation unit 2 of the building and each allocator detects individual allocation values of a radiator.

The heat consumption in an accommodation unit may also be detected with heat meters together with heat cost allocators or as an alternative to heat cost allocators.

The allocation values of the radiators are transmitted to a heat consumption manager 9 for subsequent allocation of the actual heat consumption in the accommodation units 2.

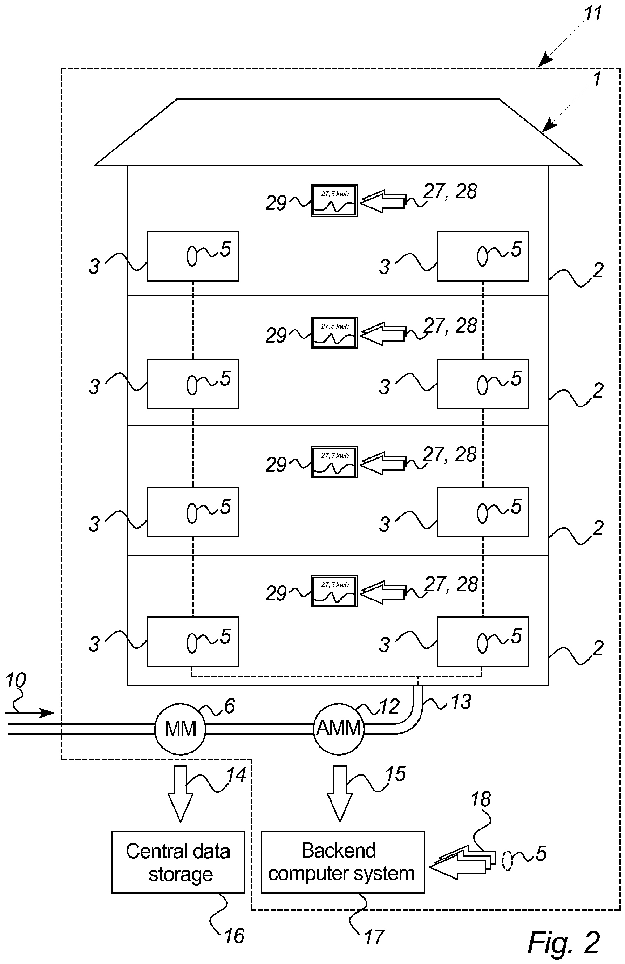

Fig. 2 illustrates a first embodiment of a heating system 11 for a building 1 according to the invention.

The building 1 comprises a number of accommodation units 2, heating arrangements 3, piping 4, heat cost allocators 5 and a main meter 6 as explained above in details with the buildings 1 connected to the district heating system of Fig. 1.

An additional main meter 12 is installed in connection with the main pipe 13 of the building 1 in proximity of the main meter 6 already provided in the main pipe. The two main meters detect representations of energy consumed in the building 1 from the same delivered fluid energy medium as main meter values and additional main meter values, respectively. The main meters are typically of a turbine-type or alternatively an ultrasonic type but any relevant type of fluid flow meters may be used in the heating system 11.

The main meter values 14 are transmitted to a central data storage 16 such as a data storage at the fluid energy medium supplier.

The additional main meter values 15 are transmitted to a backend computer system 17 such as a computer system at the heat consumption manager.

The allocation values 18 are transmitted from the heat cost allocators 5 in the building 1 to the backend computer system 17 and/or to the central data storage 16. Further, the backend computer system 17 may receive main meter values for a time period from the central data storage 16 such as the main meter values detected over a quarter, a half year or a year period.

The main meter values 14 and/or additional main meter values 15 are preferably transmitted automatically and wirelessly to the central data storage 16 and backend computer system 17, respectively.

However, the transmissions of main meter values 14 and/or additional main meter values 15 may also be performed as wired transmissions or involve manual readings of main meter values.

Further, some or all transmissions of main meter values 14, additional main meter values 15 and/or allocation values 18 may be performed as encrypted transmissions in order to ensure that the values are only understood by authorized parties.

The backend computer system 17 may establish main meter heat consumption values and additional main meter consumption values for the accommodation units 2 based on the allocation values together with the main meter values and additional main meter values, respectively.

The main meter values 14 and/or additional main meter values 15 are preferably transmitted automatically and wirelessly to the central data storage 16 and backend computer system 17, respectively.

However, the transmissions of main meter values 14 and/or additional main meter values 15 may also be performed as wired transmissions or involve manual readings of main meter values.

Further, some or all transmissions of main meter values 14, additional main meter values 15 and/or allocation values 19 may be performed as encrypted transmissions in order to ensure that the values are only understood by authorized parties.

The main meter heat consumption values and additional main meter consumption values for an accommodation unit 2 are reported to a pre-defined place as wired or wireless transmissions 27, 28 e.g. for displaying in a display unit 29 in the accommodation unit 2.

The display unit 29 may be a stationary display in an accommodation unit 2 for the tenant such as a television or a computer screen as well as a stationary display screen dedicated to displaying consumption values of the accommodation unit 2 including heat consumption values.

The display unit may also be an integrated part of a mobile apparatus belonging to the tenant or a person with a similar relation to the accommodation unit. The mobile apparatus may for example be a laptop computer or a mobile telephone wherein the user normally will be required to provide an identification and password to access and display the consumption values. The mobile apparatus allows the user to access the consumption values in or outside the accommodation unit.

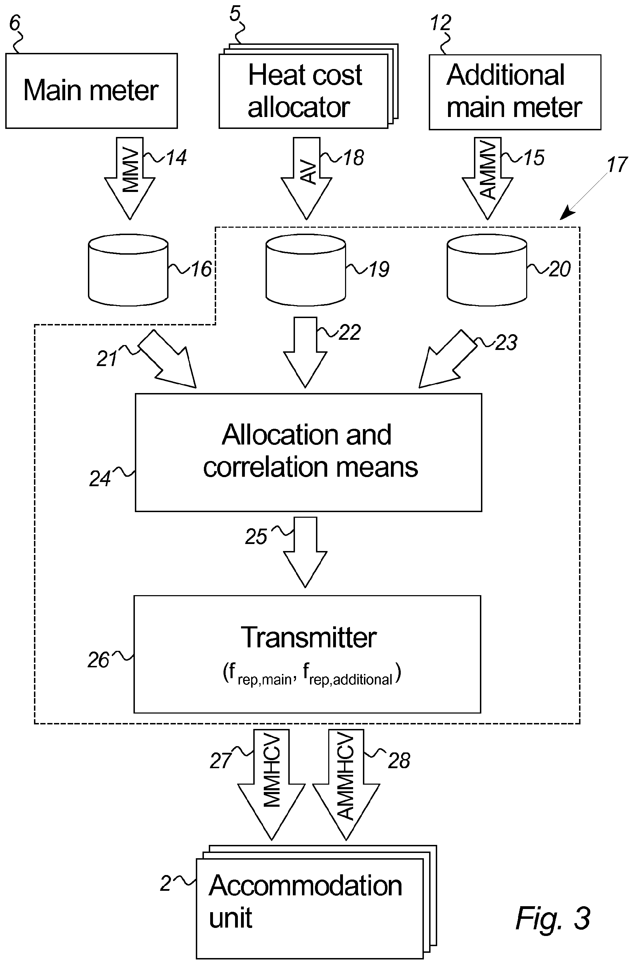

Fig. 3 illustrates the embodiment of fig. 2 in more details.

As illustrated the main meter 6 detects main meter values MMV and transmits the values 14 to the central data storage 16 via wired or wireless connections or even by a manual reading service for the main meter values MMV.

The additional main meter 12 detects additional main meter values AMMV and transmits the values 15 to data storage 20 in the backend computer system 17.

The backend computer system 17 also has data storage 19 for receiving transmissions of allocation values 18 from the heat cost allocators 5 of the building 1 in question.

The allocation values AV and the additional main meter values AMMV for a time period are transmitted 22, 23 from the data storages 19, 20 to allocation and correlation means 24. The transmitted values for an accommodation unit 2 are used for establishing additional main meter heat consumption values AMMHCV as a representation of energy consumed in the accommodation unit 2 for the time period. The establishing additional main meter heat consumption values AMMHCV are transferred 25 to a transmitter 26 which transmits the additional main meter heat consumption values 28 to the relevant accommodation unit 2 e.g. for providing heat consumption values on a regularly basis to the unit 2.

The allocation values AV and the main meter values MMV for a time period are transmitted 21, 22 from the data storages 16, 19 to allocation and correlation means 24. The transmitted values for an accommodation unit 2 are used for establishing main meter heat consumption values MMHCV as a representation of energy consumed in the accommodation unit 2 for the time period. The establishing main meter heat consumption values MMHCV are transferred 25 to a transmitter 26 which transmits the main meter heat consumption values 27 to the relevant accommodation unit 2 e.g. as a billing value for heat consumption in the time period.

The reporting frequency f_{rep,additional} of the additional main meter heat consumption values AMMHCV to the accommodation units is larger than the reporting frequency f_{rep,main} of the main meter heat consumption values MMHCV in a preferred embodiment of the invention such as three or more reports of the additional main meter heat consumption values AMMHCV per one report of the main meter heat consumption values MMHCV e.g. an embodiment with one or more reports of the additional main meter heat consumption values AMMHCV per month and a billing report of main meter heat consumption values MMHCV once every three months to the accommodation units.

The reporting frequency f_{rep,additional} of the additional main meter heat consumption values AMMHCV to the accommodation units may preferably be defined by the frequencies of the allocation values AV as received at the backend computer unit 17.

A heat cost allocator is usually powered from an internal battery which restricts the number of transmissions of allocation values AV within a time period to the backend computer system e.g. one transmission of allocation values per 24 hours or 48 hours. The number of allocation value transmissions suggests a corresponding reporting frequency f_{rep,additional} of the additional main meter heat consumption values AMMHCV to the accommodation units such as one report of additional main meter heat consumption values AMMHCV per 24 hours or 48 hours.

The corresponding reporting frequency f_{rep,additional} of the additional main meter heat consumption values AMMHCV may be increased because of increased battery power in the heat cost allocators which provide for more allocation value transmissions. Further, if the heat cost allocators are connected to the power grid or are replaced with power grid connected heat meters it is possible to even provide a continuous flow of additional main meter heat consumption values AMMHCV to the accommodation units 2.

The reporting frequency f_{rep,main} of the main meter heat consumption values MMHCV are normally transmitted from central data storage 16 to backend computer unit 17 such as quarterly, half-yearly or yearly e.g. a frequency of three or more reports of said additional main meter heat consumption values for each report of said main meter heat consumption values.

The transmissions of main meter heat consumption values 27 and additional main meter heat consumption values 28 may as mentioned above be performed as wired or wireless transmissions to the accommodation units 2 e.g. for displaying in the display units.

The transmitted main meter value 21 may also be used in the allocation and correlation means 24 as a reference value in correlation and synchronizing of the additional main meter values AMMV or derived values hereof such as the additional main meter heat consumption values AMMHCV.

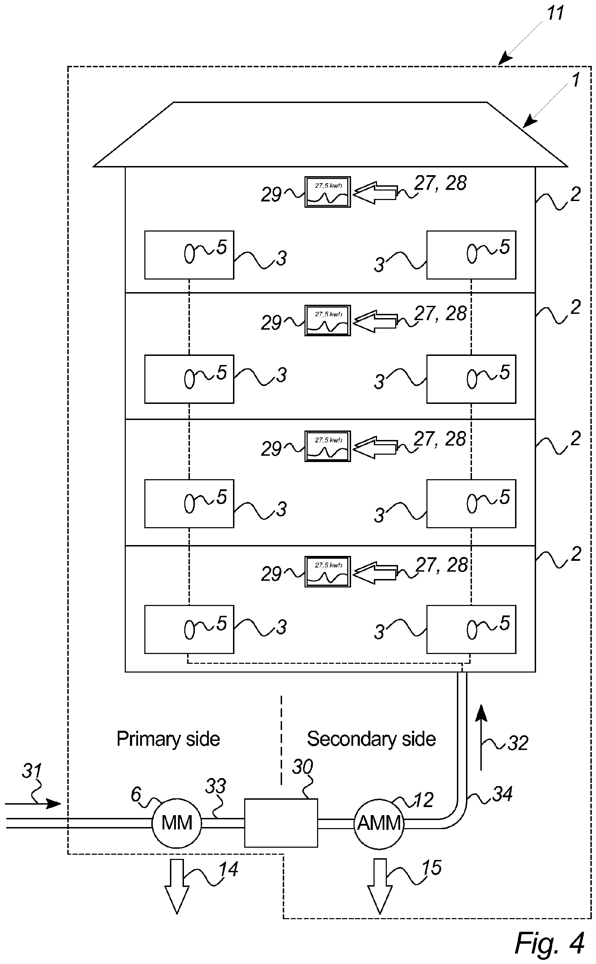

Fig. 4 illustrates a further embodiment of a heating system 11 for a building 1 according to the invention.

The further embodiment includes a heating unit 30 in the heating system 11 of the building 1. The heating unit 30 may for example be a central furnace or boiler dividing the main pipe into a primary and secondary side 33, 34. The fluid energy medium 31 received on the primary side of the heating unit 30 may be fuel oil, natural gas, liquefied petroleum gas or similar energy mediums. The heating unit 30 and the supplied fluid energy medium 31 ensure that the fluid energy medium 32 on the secondary side of the main pipe may be heated to hot air, steam or heated water for the heating arrangements 3 in the accommodation units 2 via the piping 4.

The main meter and the additional main meter may be located on the same side of the main pipe - primary or secondary side - and hereby be one meter type for measuring representations of the same fluid energy medium. The main meter and the additional main meter may also be located on opposite side of the main pipe - primary or secondary side - and hereby be one or more meter types for measuring representations of different fluid energy mediums.

The building 1 may also have a central domestic hot water generation for the accommodation units 2 wherein the hot water generation will be energy supplied from the boiler of the heating system. Normally there is a heat meter at the supply for the heat exchanger of the boiler which allows distinguishing between the energy provided for space heating by the heating system and for the domestic hot water generation. Hot water meters are used for cost allocation to the users of the domestic hot water as a supplement to the heat cost allocation in the heating system. In such a building, these heat meters and hot water meters are preferably incorporated in the main meter heat consumption values and additional main meter heat consumption values.

The embodiments of the invention illustrated in the figures are explained with the use of heat cost allocators. However, it should be understood that the scope of protection of the invention is not limited to heating systems using heat cost allocators but may be used in connection with a wide variety of heat consumption detectors in accommodation units of a building such as heat meters measuring the physical flow of energy used for heating.

The embodiments are also illustrated and explained with one additional main meter but it should be understood that two or more additional main meters may be installed on the main pipe of a building.

### List

- 1.: Building including at least two accommodation units
- 2.: Accommodation unit such as an apartment
- 3.: Heating arrangement in an accommodation unit
- 4.: Piping for heating arrangements in a building
- 5.: Heat cost allocator and/or heat meter of a heating arrangement
- 6.: Main meter for a building
- 7.: Fluid energy medium supplier
- 8.: Distribution system for a fluid energy medium such as a district heating network as part of a district heating system
- 9.: Fluid energy medium consumption manager such as a heat consumption manager
- 10.: Fluid energy medium such as heated water entering a heating system of a building

- 11.: Heating system for a building
- 12.: Additional main meter for the building
- 13.: Main pipe in a heating system of the building
- 14.: Transmission of detected main meter values from the main meter
- 15.: Transmission of detected additional main meter values from the additional main meter
- 16.: Central data storage for detected main meter values
- 17.: Backend computer system
- 18.: Transmission of detected allocation values from accommodation units
- 19.: Data storage for detected allocation values
- 20.: Data storage for detected additional main meter values
- 21.: Transmission of detected main meter values to allocation means
- 22.: Transmission of detected allocation values to allocation means
- 23.: Transmission of detected additional main meter values to allocation means
- 24.: Allocation and correlation means for main and/or additional main meter heat consumption values
- 25.: Transfer of main and/or additional main meter heat consumption values
- 26.: Transmitter of main and additional main meter heat consumption values with different reporting frequencies f_{rep,main}, f_{rep,additional}
- 27.: Transmission/reporting of main meter heat consumption values
- 28.: Transmission/reporting of additional main meter heat consumption values
- 29.: Display unit in an accommodation unit
- 30.: Heating unit of the building such as a central furnace or boiler
- 31.: Fluid energy medium on the primary side of the heating unit
- 32.: Fluid energy medium on the secondary side of the heating unit
- 33.: Main pipe on the primary side of the heating unit
- 34.: Main pipe on the secondary side of the heating unit

- AV.: Allocation value
- MM.: Main meter
- AMM.: Additional main meter
- MMV.: Main meter value
- AMMV.: Additional main meter values
- MMHCV.: Main meter heat consumption values
- AMMHCV.: Additional main meter heat consumption values

## Claims

1. A method of operating a heating system (11) including heating arrangements (3) in at least two accommodation units (2) of a building (1), said method comprising the steps of:
supplying fluid energy medium (10, 31) to the heating system (11) by a fluid energy medium supplier (7),
detecting a representation of energy consumed in the building (1) from the delivered fluid energy medium with a main meter (6) as detected main meter values (MMV), and transmitting the detected main meter values (14) to a central data storage (16),
detecting a further representation of energy consumed in the building (1) from the delivered fluid energy medium with at least one additional main meter (12) as detected additional main meter values (AMMV) and transmitting the detected additional main meter values (15) to at least one backend computer system (17),
receiving detected main meter values (MMV) from the central data storage (16) in said backend computer system (17) for allocation and/or correlation of the detected additional main meter values (AMMV) or derived representations of said detected additional main meter values,
detecting a representation of energy consumed in each of said accommodation units (2) from the delivered fluid energy medium with heat cost allocators or heat meters (5) as detected allocation values (AV) and transmitting the detected allocation values (18) to said backend computer system (17) and/or central data storage (16),
establishing main meter heat consumption values (MMHCV) for said accommodation units (2) based on said detected allocation values (AV) and said detected main meter values (MMV),
establishing additional main meter heat consumption values (AMMHCV) for said accommodation units (2) based on said detected allocation values (AV) and said detected additional main meter values (AMMV)
and
reporting said main and additional heat consumption values (27, 28) to said accommodation units (2) where the reporting frequency f_{rep,additional} of said additional main meter heat consumption values (AMMHCV) is different from the reporting frequency f_{rep,main} of said main meter heat consumption values (MMHCV).

2. A method according to claim 1 where the reporting frequency f_{rep,additional} of said additional main meter heat consumption values (AMMHCV) is larger than the reporting frequency f_{rep,main} of said main meter heat consumption values (MMHCV) such as three or more reports of said additional main meter heat consumption values for each report of said main meter heat consumption values.

3. A method according to claim 1 or 2 where said additional main meter heat consumption values (AMMHCV) are reported to said accommodation units (2) at a reporting frequency f_{rep,additional} corresponding to the transmission frequency of said detected allocation values (AV) such as one report of said additional main meter heat consumption values (AMMHCV) every 48 hours or less.

4. A method according to any of the preceding claims where said main meter heat consumption values (MMHCV) are reported to said accommodation units (2) with a reporting frequency f_{rep,main} such as quarterly, half-yearly or yearly.

5. A method according to any of the preceding claims where at least said additional main meter values (AMMV) and/or said additional main meter heat consumption values (AMMHCV) are reported automatically as wireless and/or encrypted transmissions.

6. A method according to any of the preceding claims where said at least one additional main meter (12) for detection of said fluid energy medium flowing into the heating system (11) is installed in the heating system as an initial operation.

7. Heating system (11) for a building (1) including at least two accommodation units (2) with heating arrangements (3) comprising:
a fluid energy medium supply (10, 31) for the heating system (11) supplied by a fluid energy medium supplier (7),
a main meter (6) for detection of a representation of energy consumed in the building (1) from the fluid energy medium as detected main meter values (MMV), and transmitting the detected main meter values to a central data storage (16), and
heat cost allocators or heat meters (5) for detection of a representation of energy consumed in each of said accommodation units (2) from the delivered fluid energy medium as detected allocation values (AV)
**characterized in that**
said system further comprises:
at least one additional main meter (12) for detection of a further representation of energy consumed in the building (1) from the fluid energy medium as detected additional main meter values (AMMV), and
at least one backend computer system (17) for receiving said detected additional main meter values (AMMV) transmitted by said additional main meter (12) and said detected main meter values (MMV) for allocation and/or correlation of the detected additional main meter values (AMMV) or derived representations of said detected additional main meter values,
wherein the heating system (11) is arranged to establish main meter heat consumption values (MMHCV) and additional main meter heat consumption values (AMMHCV) for said accommodation units (2) based on said detected allocation values (AV) together with said detected main meter values (MMV) and said detected additional main meter values (AMMV), respectively, and
wherein the heating system (11) is arranged to report said main and additional main meter heat consumption values (MMHCV, AMMHCV) to said accommodation units (2) with the reporting frequency f_{rep,additional} of said additional main meter heat consumption values (AMMHCV) being different from the reporting frequency f_{rep,main} of said main meter heat consumption values (MMHCV).

8. Heating system (11) according to claim 7 wherein said backend computer system (17) comprises an automatic transmitter (26) for wireless and/or encrypted data transmissions to said accommodation units (2).

9. Heating system (11) according to claim 7 or 8 wherein said additional main meter (12) comprises automatic transmitter means for wireless and/or encrypted data transmissions to said backend computer system (17).

10. Heating system (11) according to any of claims 7 to 9 wherein the reporting frequency f_{rep,additional} of said additional main meter heat consumption values (AMMHCV) is larger than the reporting frequency f_{rep,main} of said main meter heat consumption values (MMHCV) such as three or more reports of said additional main meter heat consumption values for each report of said main meter heat consumption values.

11. Heating system (11) according to any of claims 7 to 10 wherein said additional main meter heat consumption values (AMMHCV) are reported to said accommodation units (2) at a reporting frequency f_{rep,additional} corresponding to the transmission frequency of said detected allocation values (AV) such as one report of said additional main meter heat consumption values (AMMHCV) every 48 hours or less.

12. Heating system (11) according to any of claims 7 to 10 wherein said main meter heat consumption values (MMHCV) are reported to said accommodation units (2) with a reporting frequency f_{rep,main} such as a quarterly, half-yearly or yearly.

13. Use of a method of operating a heating system in a building according to any of the claims 1 to 6 as part of a district heating system.

14. Use of a heating system in a building according to any of the claims 7 to 12 as part of a district heating system.

## Patentansprüche

1. Verfahren zum Betreiben eines Heizungssystems (11), das Heizungseinrichtungen (3) in wenigstens zwei Wohneinheiten (2) eines Gebäudes (1) umfasst, wobei das Verfahren die folgenden Schritte umfasst:
Bereitstellen eines Fluid-Energiemediums (10, 31) an das Heizungssystem (11) durch einen Fluid-Energiemedium-Versorger (7),
Detektieren einer Repräsentation von Energie, die im Gebäude (1) aus dem zugeführten Fluid-Energiemedium verbraucht wird, mit einem Hauptzähler (6) als detektierte Hauptzählerwerte (MMV), und Übertragen der detektierten Hauptzählerwerte (14) an einen zentralen Datenspeicher (16),
Detektieren einer weiteren Repräsentation von Energie, die im Gebäude (1) aus dem zugeführten Fluid-Energiemedium verbraucht wird, mit wenigstens einem zusätzlichen Hauptzähler (12) als detektierte zusätzliche Hauptzählerwerte (AMMV), und Übertragen der detektierten zusätzlichen Hauptzählerwerte (15) an wenigstens ein Backend-Computersystem (17),
Empfangen detektierter Hauptzählerwerte (MMV) vom zentralen Datenspeicher (16) in dem Backend-Computersystem (17) für das Zuordnen und/oder Korrelieren der detektierten zusätzlichen Hauptzählerwerte (AMMV) oder abgeleiteter Repräsentationen der detektierten zusätzlichen Hauptzählerwerte,
Detektieren einer Repräsentation von Energie, die in jeder der Wohneinheiten (2) aus dem zugeführten Fluid-Energiemedium verbraucht wird, mit Heizkostenzuordnungsvorrichtungen oder Wärmeverbrauchszählern (5) als detektierte Zuordnungswerte (AV), und Übertragen der detektierten Zuordnungswerte (18) an das Backend-Computersystem (17) und/oder den zentralen Datenspeicher (16),
Ermitteln von Hauptzähler-Wärmeverbrauchswerten (MMHCV) für die Wohneinheiten (2) basierend auf den detektierten Zuordnungswerten (AV) und den detektierten Hauptzählerwerten (MMV),
Ermitteln zusätzlicher Hauptzähler-Wärmeverbrauchswerten (AMMHCV) für die Wohneinheiten (2) basierend auf den detektierten Zuordnungswerten (AV) und den detektierten zusätzlichen Hauptzählerwerten (AMMV), und
Berichten der Haupt- und zusätzlichen Wärmeverbrauchswerte (27, 28) an die Wohneinheiten (2), wobei die Berichtshäufigkeit f_{rep,additional} der zusätzlichen Hauptzähler-Wärmeverbrauchswerte (AMMHCV) verschieden ist von der Berichtshäufigkeit f_{rep,main} der Hauptzähler-Wärmeverbrauchswerte (MMHCV).

2. Verfahren nach Anspruch 1, wobei die Berichtshäufigkeit f_{rep,additional} der zusätzlichen Hauptzähler-Wärmeverbrauchswerte (AMMHCV) größer ist als die Berichtshäufigkeit f_{rep,main} der Hauptzähler-Wärmeverbrauchswerte (MMHCV), wie etwa drei oder mehr Berichte der zusätzlichen Hauptzähler-Wärmeverbrauchswerte für jeden Bericht der Hauptzähler-Wärmeverbrauchswerte.

3. Verfahren nach Anspruch 1 oder 2, wobei die zusätzlichen Hauptzähler-Wärmeverbrauchswerte (AMMHCV) an die Wohneinheiten (2) mit einer Berichtshäufigkeit f_{rep,additional} berichtet werden, die der Übertragungshäufigkeit der detektierten Zuordnungswerten (AV) entspricht, wie etwa ein Bericht der zusätzlichen Hauptzähler-Wärmeverbrauchswerte (AMMHCV) alle 48 Stunden oder weniger.

4. Verfahren nach einem der vorhergehenden Ansprüche, wobei die Hauptzähler-Wärmeverbrauchswerte (MMHCV) an die Wohneinheiten (2) mit einer Berichtshäufigkeit f_{rep,main} berichtet werden, die etwa vierteljährlich, halbjährlich oder jährlich ist.

5. Verfahren nach einem der vorhergehenden Ansprüche, wobei wenigstens die zusätzlichen Hauptzählerwerte (AMMV) und/oder die zusätzlichen Hauptzähler-Wärmeverbrauchswerte (AMMHCV) automatisch als drahtlose und/oder verschlüsselte Übertragungen berichtet werden.

6. Verfahren nach einem der vorhergehenden Ansprüche, wobei der wenigstens eine zusätzliche Hauptzähler (12) für die Detektion des Fluid-Energiemediums, das in das Heizungssystem (11) hineinfließt, im Heizungssystem als ein initialer Vorgang installiert wird.

7. Heizungssystem (11) für ein Gebäude (1), das wenigstens zwei Wohneinheiten (2) mit Heizungseinrichtungen (3) umfasst, Folgendes umfassend:
eine Bereitstellung eines Fluid-Energiemediums (10, 31) an das Heizungssystem (11), das durch einen Fluid-Energiemedium-Versorger (7) bereitgestellt wird,
einen Hauptzähler (6) zum Detektieren einer Repräsentation von Energie, die im Gebäude (1) aus dem Fluid-Energiemedium verbraucht wird, als detektierte Hauptzählerwerte (MMV), und Übertragen der detektierten Hauptzählerwerte an einen zentralen Datenspeicher (16), und
Heizkostenzuordnungsvorrichtungen oder Wärmeverbrauchszähler (5) zum Detektieren einer Repräsentation von Energie, die in jeder der Wohneinheiten (2) aus dem zugeführten Fluid-Energiemedium verbraucht wird, als detektierte Zuordnungswerte (AV),
**dadurch gekennzeichnet, dass** das System außerdem Folgendes umfasst:
wenigstens einen zusätzlichen Hauptzähler (12) zum Detektieren einer weiteren Repräsentation von Energie, die im Gebäude (1) aus dem Fluid-Energiemedium verbraucht wird, als detektierte zusätzliche Hauptzählerwerte (AMMV), und
wenigstens ein Backend-Computersystem (17) zum Empfangen der detektierten zusätzlichen Hauptzählerwerte (AMMV), die vom zusätzlichen Hauptzähler (12) übertragen werden, und der detektierten Hauptzählerwerte (MMV) für das Zuordnen und/oder Korrelieren der detektierten zusätzlichen Hauptzählerwerte (AMMV) oder abgeleiteter Repräsentationen der detektierten zusätzlichen Hauptzählerwerte,
wobei das Heizungssystem (11) dafür eingerichtet ist, für die Wohneinheiten (2) Hauptzähler-Wärmeverbrauchswerte (AMMHCV) und zusätzliche Hauptzähler-Wärmeverbrauchswerte (AMMHCV) zu ermitteln, basierend auf den detektierten Zuordnungswerten (AV) und zusammen mit den detektierten Hauptzählerwerten (MMV) bzw. den detektierten zusätzlichen Hauptzählerwerten (AMMV), und
wobei das Heizungssystem (11) dafür eingerichtet ist, die Haupt- und zusätzlichen Hauptzähler-Wärmeverbrauchswerte (MMHCV, AMMHCV) an die Wohneinheiten (2) zu berichten, wobei die Berichtshäufigkeit f_{rep,additional} der zusätzlichen Hauptzähler-Wärmeverbrauchswerte (AMMHCV) verschieden ist von der Berichtshäufigkeit f_{rep,main} der Hauptzähler-Wärmeverbrauchswerte (MMHCV).

8. Heizungssystem (11) nach Anspruch 7, wobei das Backend-Computersystem (17) einen automatischen Sender (26) für drahtlose und/oder verschlüsselte Datenübertragungen an die Wohneinheiten (2) umfasst.

9. Heizungssystem (11) nach Anspruch 7 oder 8, wobei der zusätzliche Hauptzähler (12) ein automatisches Sendemittel für drahtlose und/oder verschlüsselte Datenübertragungen an das Backend-Computersystem (17) umfasst.

10. Heizungssystem (11) nach einem der Ansprüche 7 bis 9, wobei die Berichtshäufigkeit f_{rep,additional} der zusätzlichen Hauptzähler-Wärmeverbrauchswerte (AMMHCV) größer ist als die Berichtshäufigkeit f_{rep,main} der Hauptzähler-Wärmeverbrauchswerte (MMHCV), wie etwa drei oder mehr Berichte der zusätzlichen Hauptzähler-Wärmeverbrauchswerte für jeden Bericht der Hauptzähler-Wärmeverbrauchswerte.

11. Heizungssystem (11) nach einem der Ansprüche 7 bis 10, wobei die zusätzlichen Hauptzähler-Wärmeverbrauchswerte (AMMHCV) an die Wohneinheiten (2) mit einer Berichtshäufigkeit f_{rep,additional} berichtet werden, die der Übertragungshäufigkeit der detektierten Zuordnungswerten (AV) entspricht, wie etwa ein Bericht der zusätzlichen Hauptzähler-Wärmeverbrauchswerte (AMMHCV) alle 48 Stunden oder weniger.

12. Heizungssystem (11) nach einem der Ansprüche 7 bis 10, wobei die Hauptzähler-Wärmeverbrauchswerte (MMHCV) an die Wohneinheiten (2) mit einer Berichtshäufigkeit f_{rep,main} berichtet werden, die etwa vierteljährlich, halbjährlich oder jährlich ist.

13. Verwendung eines Verfahrens zum Betreiben eines Heizungssystems in einem Gebäude nach einem der Ansprüche 1 bis 6 als Teil eines Stadtteil-Heizungssystems.

14. Verwendung eines Heizungssystems in einem Gebäude nach einem der Ansprüche 7 bis 12 als Teil eines Stadtteil-Heizungssystems.

## Revendications

1. Procédé de fonctionnement d'un système de chauffage (11) incluant des agencements de chauffage (3) dans au moins deux unités d'hébergement (2) d'un bâtiment (1), ledit procédé comprenant les étapes de :
fournir un moyen d'énergie fluide (10, 31) au système de chauffage (11) par un fournisseur de moyen d'énergie fluide (7) ;
détecter une représentation d'énergie consommée dans le bâtiment (1) à partir du moyen d'énergie fluide délivré, avec un compteur principal (6), en tant que valeurs de compteur principal détectées (MMV), et transmettre les valeurs de compteur principal détectées (14) à un stockage central de données (16) ;
détecter une représentation supplémentaire de l'énergie consommée dans le bâtiment (1), à partir du moyen d'énergie fluide délivré, avec au moins un compteur principal supplémentaire (12), en tant que valeurs de compteur principal supplémentaire détectées (AMMV) et transmettre les valeurs de compteur principal supplémentaire détectées (15) à au moins un système informatique dorsal (17) ;
recevoir des valeurs de compteur principal détectées (MMV) en provenance du stockage central de données (16) dans ledit système informatique dorsal (17), en vue d'une affectation et/ou d'une corrélation des valeurs de compteur principal supplémentaire détectées (AMMV) ou des représentations dérivées desdites valeurs de compteur principal supplémentaire détectées ;
détecter une représentation de l'énergie consommée dans chacune desdites unités d'hébergement (2) à partir du moyen d'énergie fluide délivré, avec des modules d'affectation de coûts de chauffage ou des calorimètres (5), en tant que valeurs d'affectation détectées (AV), et transmettre les valeurs d'affectation détectées (18) audit système informatique dorsal (17) et/ou audit stockage central de données (16) ;
établir des valeurs de consommation thermique de compteur principal (MMHCV) pour lesdites unités d'hébergement (2), à partir desdites valeurs d'affectation détectées (AV) et desdites valeurs de compteur principal détectées (MMV) ;
établir des valeurs de consommation thermique de compteur principal supplémentaire (AMMHCV) pour lesdites unités d'hébergement (2), à partir desdites valeurs d'affectation détectées (AV) et desdites valeurs de compteur principal supplémentaire détectées (AMMV) ; et
rapporter lesdites valeurs de consommation thermique de compteur principal et de compteur principal supplémentaire (27, 28) auxdites unités d'hébergement (2), où la fréquence de rapport f_{rep,additional} desdites valeurs de consommation thermique de compteur principal supplémentaire (AMMHCV) est différente de la fréquence de rapport f_{rep,main} desdites valeurs de consommation thermique de compteur principal (MMHCV).

2. Procédé selon la revendication 1, dans lequel la fréquence de rapport f_{rep,additional} desdites valeurs de consommation thermique de compteur principal supplémentaire (AMMHCV) est supérieure à la fréquence de rapport f_{rep,main} desdites valeurs de consommation thermique de compteur principal (MMHCV), tel que trois rapports ou plus desdites valeurs de consommation thermique de compteur principal supplémentaire pour chaque rapport desdites valeurs de consommation thermique de compteur principal.

3. Procédé selon la revendication 1 ou 2, dans lequel lesdites valeurs de consommation thermique de compteur principal supplémentaire (AMMHCV) sont signalées auxdites unités d'hébergement (2) à une fréquence de rapport f_{rep,additional} correspondant à la fréquence de transmission desdites valeurs d'affectation détectées (AV), tel qu'un rapport desdites valeurs de consommation thermique de compteur principal supplémentaire (AMMHCV) toutes les 48 heures ou moins.

4. Procédé selon l'une quelconque des revendications précédentes, dans lequel lesdites valeurs de consommation thermique de compteur principal (MMHCV) sont signalées auxdites unités d'hébergement (2) avec une fréquence de rapport f_{rep,main}, telle que trimestrielle, semestrielle ou annuelle.

5. Procédé selon l'une quelconque des revendications précédentes, dans lequel au moins lesdites valeurs de compteur principal supplémentaire (AMMV) et/ou lesdites valeurs de consommation de thermique de compteur principal supplémentaire (AMMHCV) sont rapportées automatiquement par des émissions sans fil et/ou chiffrées.

6. Procédé selon l'une quelconque des revendications précédentes, dans lequel ledit au moins un compteur principal supplémentaire (12) permettant la détection dudit moyen d'énergie fluide circulant dans le système de chauffage (11) est installé dans le système de chauffage en tant qu'une opération initiale.

7. Système de chauffage (11) pour un bâtiment (1) incluant au moins deux unités d'hébergement (2) avec des agencements de chauffage (3) comprenant :
une fourniture de moyen d'énergie fluide (10, 31) pour le système de chauffage (11), fournie par un fournisseur de moyen d'énergie fluide (7) ;
un compteur principal (6) pour détecter une représentation d'énergie consommée dans le bâtiment (1) à partir du moyen d'énergie fluide délivré, en tant que valeurs de compteur principal détectées (MMV), et transmettre les valeurs de compteur principal détectées à un magasin de stockage de données central (16) ;
des modules d'affectation de coûts de chauffage ou des calorimètres (5) pour détecter une représentation d'énergie consommée dans chacune desdites unités d'hébergement (2) à partir du moyen d'énergie fluide délivré, en tant que valeurs d'affectation détectées (AV) ;
**caractérisé en ce que**
ledit système comprend en outre :
au moins un compteur principal supplémentaire (12) pour détecter une représentation supplémentaire de l'énergie consommée dans le bâtiment (1) à partir du moyen d'énergie fluide, en tant que valeurs de compteur principal supplémentaire détectées (AMMV) ; et
au moins un système informatique dorsal (17) pour recevoir lesdites valeurs de compteur principal supplémentaire détectées (AMMV) transmises par ledit compteur principal supplémentaire (12) et lesdites valeurs de compteur principal détectées (MMV) pour une affectation et/ou une corrélation des valeurs de compteur principal supplémentaire détectées (AMMV) ou de représentations dérivées desdites valeurs de compteur principal supplémentaire détectées ;
dans lequel le système de chauffage (11) est agencé de manière à établir des valeurs de consommation thermique de compteur principal (MMHCV) et des valeurs de consommation thermique de compteur principal supplémentaire (AMMHCV) pour lesdites unités d'hébergement (2) à partir desdites valeurs d'affectation détectées (AV) conjointement avec lesdites valeurs de compteur principal détectées (MMV) et lesdites valeurs de compteur principal supplémentaire détectées (AMMV), respectivement ; et
dans lequel le système de chauffage (11) est agencé de manière à rapporter lesdites valeurs de consommation thermique de compteur principal et de compteur principal supplémentaire (MMHCV, AMMHCV) auxdites unités d'hébergement (2), où la fréquence de rapport f_{rep,additional} desdites valeurs de consommation thermique de compteur principal supplémentaire (AMMHCV) est différente de la fréquence de rapport f_{rep,main} desdites valeurs de consommation thermique de compteur principal (MMHCV).

8. Système de chauffage (11) selon la revendication 7, dans lequel ledit système informatique dorsal (17) comprend un émetteur automatique (26) pour des émissions de données sans fil et/ou chiffrées auxdites unités d'hébergement (2).

9. Système de chauffage (11) selon la revendication 7 ou 8, dans lequel ledit compteur principal supplémentaire (12) comprend des moyens d'émission automatique pour des émissions de données sans fil et/ou chiffrées audit système informatique dorsal (17).

10. Système de chauffage (11) selon l'une quelconque des revendications 7 à 9, dans lequel la fréquence de rapport f_{rep,additional} desdites valeurs de consommation thermique de compteur principal supplémentaire (AMMHCV) est supérieure à la fréquence de rapport f_{rep,main} desdites valeurs de consommation thermique de compteur principal (MMHCV), tel que trois rapports ou plus desdites valeurs de consommation thermique de compteur principal supplémentaire pour chaque rapport desdites valeurs de consommation thermique de compteur principal.

11. Système de chauffage (11) selon l'une quelconque des revendications 7 à 10, dans lequel lesdites valeurs de consommation thermique de compteur principal supplémentaire (AMMHCV) sont signalées auxdites unités d'hébergement (2) à une fréquence de rapport f_{rep,additional} correspondant à la fréquence de transmission desdites valeurs d'affectation détectées (AV), tel qu'un rapport desdites valeurs de consommation thermique de compteur principal supplémentaire (AMMHCV) toutes les 48 heures ou moins.

12. Système de chauffage (11) selon l'une quelconque des revendications 7 à 10, dans lequel lesdites valeurs de consommation thermique de compteur principal (MMHCV) sont signalées auxdites unités d'hébergement (2) avec une fréquence de rapport f_{rep,main} telle que trimestrielle, semestrielle ou annuelle.

13. Utilisation d'un procédé de fonctionnement d'un système de chauffage dans un bâtiment selon l'une quelconque des revendications 1 à 6, dans le cadre d'un système de chauffage urbain.

14. Utilisation d'un système de chauffage dans un bâtiment selon l'une quelconque des revendications 7 à 12, dans le cadre d'un système de chauffage urbain.
